Europäisches Patentamt

European Patent Office

Office européen des brevets

(19)

(11) Numéro de publication : **0 296 942 B1**

## FASCICULE DE BREVET EUROPEEN

(12)

(45) Date de publication du fascicule du brevet :
**02.01.92 Bulletin 92/01**

(51) Int. Cl.$^5$ : **B23K 35/00, C04B 37/02**

(21) Numéro de dépôt : **88401496.0**

(22) Date de dépôt : **16.06.88**

(54) **Procédé de brasage au four sous atmosphère raréfiée ou contrôlée de deux pièces.**

(30) Priorité : **17.06.87 FR 8708434**

(43) Date de publication de la demande :
**28.12.88 Bulletin 88/52**

(45) Mention de la délivrance du brevet :
**02.01.92 Bulletin 92/01**

(84) Etats contractants désignés :
**DE ES GB IT NL**

(56) Documents cités :
**EP-A- 0 211 557**
**DE-A- 2 527 325**
**DE-B- 1 045 305**
**DE-B- 1 172 930**

(56) Documents cités :
**FR-A- 1 181 438**
**FR-A- 2 312 846**
**US-A- 3 097 329**
**US-A- 3 428 846**
**US-A- 4 598 025**

(73) Titulaire : **INNOVATIQUE S.A.**
**Place Charles Andrieu**
**F-60530 Neuilly en Thelle (FR)**

(72) Inventeur : **Gabriel, Marcel**
**19 rue du Mouthier**
**F-60530 Neuilly en Thelle (FR)**

(74) Mandataire : **Patentanwälte Dr. Solf & Zapf**
**Zeppelinstrasse 53**
**W-8000 München 80 (DE)**

## Description

La présente invention a pour objet un procédé de brasage au four sous atmosphère raréfiée ou contrôlée de deux pièces présentant des coefficients de dilatation très différents et/ou destinées à subir de forts gradients thermiques.

D'une manière générale, on sait que selon la technique classique du brasage au four, les pièces à braser sont préalablement assemblées, par exemple à l'aide d'éléments annexes, de manière à ce que leurs zones de contact où doit s'effectuer le brasage soient appliquées l'une contre l'autre dans leurs positions définitives, avec interposition du composé métallique d'apport (brasure) qui se présente habituellement sous la forme d'une fine plaquette, fil ou pâte à braser suivant la conception des pièces à braser.

Cet ensemble est ensuite introduit dans un four de traitement thermique apte à assurer un cycle thermique approprié, au cours duquel les deux pièces sont portées à une température élevée engendrant la fusion du composé métallique d'apport qui, à l'état liquide, peut alors diffuser d'une certaine profondeur dans la matière constitutive des deux pièces, au niveau des zones de contact. En fin de cycle, les pièces sont soumises à une phase de refroidissement entraînant la solidification du composé métallique d'apport et le retour de l'ensemble à la température ambiante.

Pour tenir compte de la nature des pièces à braser et du composé métallique d'apport utilisé, ce cycle thermique peut s'effectuer sous atmosphère contrôlée ou même sous vide, notamment en vue d'éviter des réactions chimiques inopportunes et, en particulier, des phénomènes d'oxydation qui pourraient compromettre la qualité du brasage, cette solution présentant en outre l'avantage d'éviter l'utilisation d'un flux.

Cette technique convient bien lorsque les deux pièces à braser présentent des coefficients de dilatation similaires. Par contre, dans le cas où ces pièces présentent des coefficients de dilatation très différents, il se produit au niveau de la zone de jonction des deux pièces où est réalisé le brasage, des phénomènes de dilatation différentielle pouvant conduire, notamment lors de la phase de refroidissement, à des décollements de la brasure, ainsi qu'à des détériorations, voire même des ruptures de l'une et/ou l'autre de ces deux pièces.

Bien entendu, ces inconvénients se manifestent également dans le cas où ces deux pièces, une fois brasées, sont soumises à de fortes élévations de température.

De même, ces phénomènes de dilatation différentielle peuvent intervenir dans le cas où les deux pièces présentent des coefficients de dilatation similaires et sont soumises après brasage à des températures différentes.

Tel est notamment le cas de certains éléments utilisés dans des échangeurs thermiques qui sont formés de deux pièces assemblées par brasure, dont l'une est portée à une température élevée et l'autre est constamment refroidie.

Par le brevet US-A-3097329 on a proposé de résoudre des problèmes de dilatation différentielle entre une plaquette de silicium d'un semiconducteur et son substrat, en intercalant entre ces deux pièces une plaque en matériau fritté dont la composition et le coefficient de dilatation varient d'une face à l'autre. Toutefois, ce procédé qui vise à améliorer la conductibilité thermique et électrique entre les deux pièces, ne comprend pas le brasage de ces deux pièces.

De même, le brevet européen EP-A2-0211557 propose d'augmenter la résistance mécanique de la soudure entre une pièce en céramique et une pièce en métal en interposant un élément intermédiaire comprenant une couche d'alliage d'argent et une couche de titane.

L'invention a donc plus particulièrement pour but de supprimer les inconvénients précédemment évoqués, en particulier dans le cas du brasage entre une pièce en un matériau à bas coefficient de dilatation tel que du graphite, une céramique ou même un métal revêtu d'une céramique, et une pièce à haut coefficient de dilatation, en un matériau métallique ou non, pouvant se braser ou recevoir un revêtement permettant le brasage, et résistant à la température à laquelle doit s'effectuer le brasage, par exemple une température de l'ordre de 800°C ou plus.

Elle propose un procédé de brasage au four, sous atmosphère raréfiée ou contrôlée de deux pièces présentant des coefficients de dilatation différents et/ou étant destinées à subir de forts gradients thermiques au niveau de leur jonction, ce procédé consistant à intercaler, entre les deux zones des deux pièces où doit s'effectuer la brasure, un élément intercalaire ainsi que du métal d'apport, et à introduire cet ensemble dans le four et à assurer un cycle thermique au cours duquel les deux pièces sont portées à une température élevée engendrant la fusion du composé métallique d'apport, les deux pièces étant ensuite soumises à une phase de refroidissement entraînant la solidification du composé métallique d'apport et le retour de l'ensemble à la température ambiante.

Selon l'invention, ce procédé est caractérisé en ce que l'élément intercalaire comprend, d'une part, une première plaquette ou clinquant en métal réfractaire tel que du molybdène, du tantale, du hafnium, du zirconium, du niobium, du tungstène, ou un alliage incluant l'un au moins de ces éléments et, d'autre part, une deuxième plaquette ou clinquant en cuivre, alliage cuivreux, titane, alliage titane, nickel ou alliage nickel, le composé métallique d'apport étant alors disposé entre lesdites plaquettes et entre lesdites plaquettes et lesdites pièces, et en ce que la deuxième plaquette ou clinquant est disposée entre la première plaquette et la pièce qui présente le plus grand coefficient de dilatation.

Il s'avère que la susdite plaquette ou clinquant de métal réfractaire permet d'assurer une accomodation des contraintes thermiques entre ces deux pièces. Par ailleurs, du fait qu'elle présente un coefficient de dilatation intermédiaire relativement à celui des deux pièces, elle constitue donc une zone de transition qui réduit les effets des dilatations différentielles entre les deux pièces.

En outre, elle constitue une barrière permettant d'éviter la formation d'eutectiques entre les matériaux constitutifs des deux pièces en cas d'élévation de température.

Avantageusement, le procédé selon l'invention pourra comprendre un traitement de surface préalable sur la zone de jonction de la pièce présentant le coefficient de dilatation le plus élevé.

Ainsi, la zone de jonction de la pièce présentant le coefficient de dilatation le plus élevé pourra être préalablement recouverte d'une couche de cuivre, par exemple par dépôt physique de vapeur métallique (PVD) ou par voie électrolytique.

Ce traitement de surface a pour but, d'une part, d'augmenter la mouillabilité de la brasure à la surface des pièces à braser et, d'autre part, de protéger les surfaces à braser contre d'éventuelles oxydations qui pourraient intervenir lors du cycle de brasage.

Dans le cas d'applications spécifiques, un revêtement tel que l'or, le platine, le palladium, l'argent, le lithium, le germanium (ou des alliages comprenant ces composants) sera utilisé.

Une ou plusieurs plaquettes ou clinquants de différents matériaux, par exemple en cuivre ou en titane, sera disposée en intercalaire entre la pièce ayant subie le traitement de surface préalable et la ou les plaquettes ou clinquants en matériau réfractaire.

En raison de sa maléabilité, ce ou ces plaquettes ou clinquants (cuivre ou titane par exemple) servira à jouer le rôle d'un amortisseur, contribuant à atténuer les effets des contraintes résultant des dilatations différentielles.

Bien entendu, l'invention concerne également les pièces obtenues par brasage d'au moins deux éléments, conformément au procédé selon l'invention.

Des modes d'exécution de l'invention seront décrits ci-après, à titre d'exemples non limitatifs, avec référence aux dessins annexés dans lesquels :

La figure 1 est une coupe schématique montrant l'agencement des différents éléments utilisés en vue du brasage de deux pièces selon un premier mode d'exécution de l'invention ;

La figure 2 est une coupe schématique illustrant une variante de l'agencement représenté figure 1 ;

La figure 3 est un diagramme représentatif de la température d'un four en fonction du temps, au cours d'un cycle de brasage.

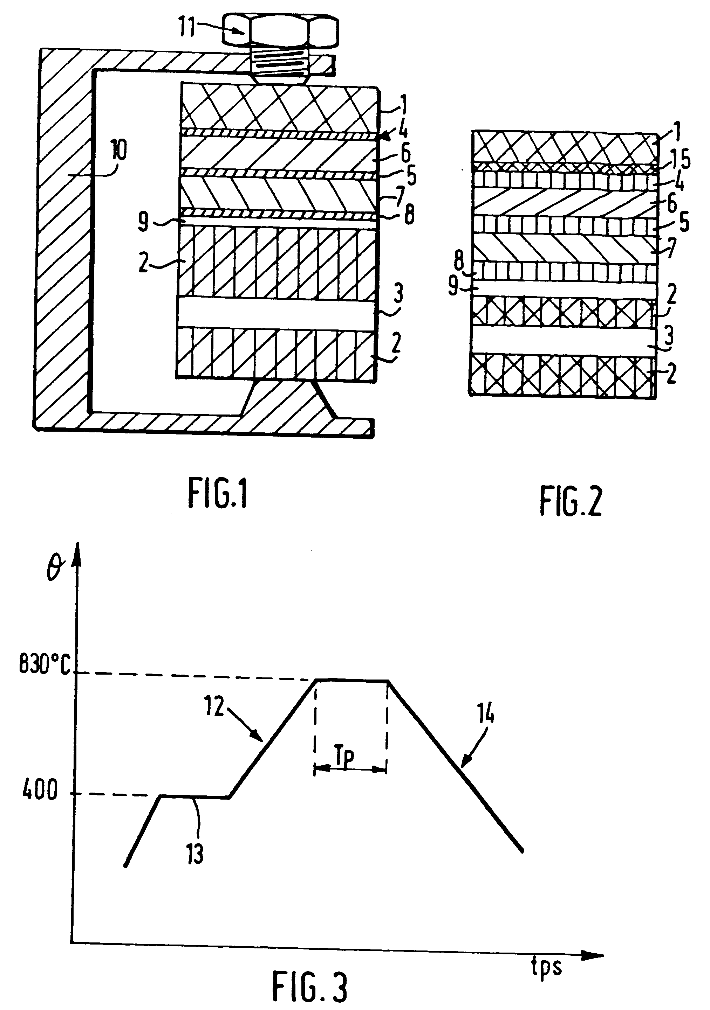

Dans l'exemple représenté sur la figure 1, les deux pièces à assembler consistent en une première pièce en graphite 1, qui présente un très faible coefficient de dilatation et est destinée à être exposée à des élévations de température, par exemple sous l'effet de rayonnements à haut pouvoir énergétique, et une deuxième pièce métallique 2, en acier inoxydable, munie d'un canal 3 permettant le passage d'un fluide de refroidissement. Cette deuxième pièce 2 qui, en principe, est constamment refroidie, n'est pas prévue pour subir des élévations de température importantes.

L'assemblage de ces deux pièces par brasage pose alors un double problème, en effet :

Au cours du brasage, les deux pièces 1, 2 doivent être nécessairement échauffées à une température relativement élevée (de l'ordre de 830°C) qui correspond à la température de fusion du composé métallique d'apport qui peut, par exemple, consister en une brasure de type "bas argent" contenant du cuivre et du titane. En conséquence, au cours de cet échauffement, la pièce en acier inoxydable 2 qui présente un coefficient de dilatation relativement élevé, va se dilater, tandis que la pièce en graphite 1 ne subira pas de modification dimensionnelle. Ensuite, au cours de la phase de refroidissement, où la brasure retourne à l'état solide, la pièce en acier inoxydable 2 va se rétracter en exerçant sur la pièce en graphite 1 des contraintes mécaniques importantes (cisaillement/traction), par l'intermédiaire de la brasure solidifiée. Ces contraintes pourront alors atteindre des niveaux suffisamment élevés pour entraîner la rupture de la pièce en graphite 1 et/ou un décollement partiel ou total des deux pièces 1, 2.

Le deuxième problème inhérent à ce type d'assemblage résulte du fait que, lors de l'utilisation de l'ensemble une fois brasé, malgré le fait qu'elle se trouve constamment refroidie, la pièce en acier inoxydable 2 subira un échauffement au moins au niveau de sa zone de jonction avec la pièce de graphite 1, précisément au niveau où est réalisée la brasure. Cet échauffement qui engendrera des phénomènes de dilatation de la pièce en acier inoxydable 2 au moins au niveau des susdites zones, conduira donc aux mêmes inconvénients que ceux précédemment évoqués.

A ces deux problèmes se rajoutent également ceux résultant du fait qu'au niveau des zones de jonction, il risque de se former des mélanges eutectiques notamment entre le fer présent dans l'acier inoxydable et le graphite, ainsi que des oxydations, notamment du chrome présent dans l'acier inoxydable. Il est clair que la formation de ces mélanges eutectiques et de ces oxydes peut altérer considérablement la qualité du brasage.

Comme précédemment mentionné, le procédé selon l'invention permet de supprimer tous ces inconvénients.

Il consiste à interposer entre les deux pièces 1, 2 à braser, une plaquette ou clinquant 6 en métal réfractaire, ici une plaquette de molybdène 6 et une plaquette ou clinquant en métal, ici une plaquette de cuivre 7, qui serviront, d'une part, à accomoder les contraintes exercées entre les deux pièces, notamment lors du brasage, et qui permettront ensuite de diminuer l'échauffement de la zone de jonction de la pièce en acier inoxydable (figure 1).

Bien entendu, entre la plaquette 6 et la pièce en graphique 1 ainsi qu'entre la plaquette en molybdène 6 et la plaquette en cuivre 7 et de même entre cette dernière 7 et la pièce en acier inoxydable 2 revêtue d'une couche en cuivre 9, sont disposées des plaquettes de brasure respectivement 4, 5, 8 (figure 1).

Par ailleurs, les zones de jonction des deux pièces 1, 2 pourront subir des traitements de surface appropriés.

Ainsi, la pièce en acier inoxydable 2 pourra notamment subir un cuivrage 9 électrolytique ou obtenu par dépôt PVD, qui en plus de son aptitude au brasage (amélioration de la mouillabilité de la brasure), constituera une barrière "chimique" permettant d'éviter l'oxydation de l'acier inoxydable (oxyde de chrome en particulier).

Avantageusement, le brasage des deux pièces 1, 2 sera effectué sous pression de manière à améliorer la diffusion de la brasure vers le graphite qui présente une certaine porosité.

Cette pression peut être exercée par exemple à l'aide d'une presse 10 à vis 11 du type de celle qui est représentée sur la figure 1. Le couple de serrage sera calculé en fonction de la nature et du taux de porosité des matériaux employés.

L'ensemble formé par les pièces 1, 2 préassemblées et maintenues sous pression, avec interposition des plaquettes de molybdène 6 et de cuivre 7 et des trois clinquants de métal d'apport ou brasure 4, 5 et 8 (comme représenté figure 1) est introduit dans un four de traitement thermique sous vide, pour subir le cycle thermique produisant le brasage.

Comme on peut le voir sur la figure 3, ce cycle comprend tout d'abord une phase de montée en température 12, incluant de préférence un palier d'homogénéisation 13 à environ 400°C. Cette phase de montée en température se poursuit jusqu'à ce que l'on obtienne une température d'environ 830°C qui correspond à la température de fusion de la brasure. A partir de cette température, la température est maintenue constante pendant une durée déterminée $T_P$ en fonction de la profondeur de diffusion de la brasure vers le graphite que l'on désire atteindre (d'une façon plus générale, cette durée dépend de la porosité et de la massivité des pièces à braser).

Ainsi, dans l'exemple illustré sur la figure 1, cette durée pourra être de l'ordre de 1 h dans le cas où la pièce de graphite 1 présente une forme parallélépipédique, dont la longueur et la largeur sont de l'ordre de 100 mm, et qui présente une épaisseur de l'ordre de 300 mm.

La dernière phase du cycle est une phase de refroidissement 14 qui peut être plus ou moins rapide selon l'application considérée.

Comme représenté sur la figure 2, la pièce en graphite 1 peut être revêtue d'une couche de céramique 15, par exemple en nitrure de titane TiN, en alumine $Al_2O_3$ ou en zircone $ZrO_2$.

La plaquette de molybdène 6 pourrait être remplacée par une plaquette en un métal ou en un alliage métallique réfractaire incluant ou consistant en du tantale, du hafnium, du zirconium, du niobium ou du tungstène.

De même, la plaquette 7 en cuivre pourra être remplacée par une plaquette en alliage cuivreux, en bronze, voire même en titane.

Comme précédemment mentionné, la pièce 2 pourra être réalisée en un matériau métallique ou non, éventuellement revêtu d'une couche 9 apte à recevoir la brasure, par exemple une couche de céramique, de métal ou d'alliage obtenue par toute technique de revêtement (dépôt physique en phase vapeur, dépôt électrolytique, dépôt chimique en phase vapeur, torche plasma,...).

Pour des applications courantes, ce revêtement 9 pourra consister en du cuivre ou du nickel déposé électrolytiquement ou par dépôt de vapeur métallique (PVD). Pour des applications plus spécifiques, ce revêtement pourra consister en de l'argent, de l'or, du germanium, du lithium, du palladium, du platine ou en un alliage incluant l'un au moins de ces éléments.

Par ailleurs, dans certaines applications, il sera possible de n'intercaler entre les deux pièces 1 et 2 à braser que la plaquette ou clinquant en métal réfractaire 6 avec interposition entre cette plaquette 6 et les pièces 1 et 2 de deux plaquettes de brasure.

**Revendications**

1. Procédé de brasage au four, sous atmosphère raréfiée ou contrôlée de deux pièces (1, 2) présentant des coefficients de dilatation différents et/ou étant destinées à subir de forts gradients thermiques au niveau de leur jonction, ce procédé consistant à intercaler, entre les deux zones des deux pièces (1) et (2) où doit s'effectuer la brasure, un élément intercalaire ainsi que du métal d'apport, et à introduire cet ensemble dans le four et à assurer un cycle thermique au cours duquel les deux pièces sont portées à une température élevée engendrant la fusion du composé métallique d'apport, les deux pièces étant ensuite soumises à une phase de refroidissement entraînant la solidification du composé métallique d'apport et le retour de l'ensemble à la température ambiante, caractérisé en ce que l'élément intercalaire comprend, d'une part, une première plaquette ou clinquant en métal réfractaire (6) tel que du molybdène, du tantale, du hafnium, du zirconium, du niobium, du tungstène, ou un alliage incluant l'un au moins de ces éléments et, d'autre part, une deuxième plaquette ou clinquant (7) en cuivre, alliage cuivreux, titane, alliage titane, nickel ou alliage nickel, le composé métallique d'apport (4, 5) et (8) étant alors disposé entre lesdites plaquettes (6, 7) et entre lesdites plaquettes (6, 7) et lesdites pièces (1, 2), et en ce que la deuxième plaquette ou clinquant (7) est disposée entre la première plaquette (6) et la pièce (2) qui présente le plus grand coefficient de dilatation.

2. Procédé selon la revendication 1, caractérisé en ce que les pièces (1, 2) sont pressées l'une contre l'autre, au cours du brasage, la pression et le couple de serrage étant calculés en fonction des matériaux employés.

3. Procédé selon l'une des revendications 1 et 2, caractérisé en ce que la pièce (1) présentant le plus bas coefficient de dilatation et/ou destinée à être portée à la plus haute température est réalisée en graphite, céramique ou tous matériaux à bas coefficient de dilatation, éventuellement recouvert au moins d'un revêtement (15) permettant la brasure.

4. Procédé selon l'une des revendications précédentes, caractérisé en ce que la pièce (2) présentant le plus grand coefficient de dilatation et/ou destinée à être portée à la plus basse température est réalisée en un matériau métallique ou un matériau non métallique éventuellement recouvert, au moins sur la surface à braser de la pièce (1), d'un revêtement (9).

5. Procédé selon la revendication 4, caractérisé en ce que le susdit revêtement (9) consiste en du cuivre ou du nickel déposé électrolytiquement ou par dépôt de vapeur métallique (PVD) dans le cas d'applications courantes, pour des applications plus spécifiques, ce revêtement pouvant consister en de l'argent ou de l'or, du germanium, du lithium, du palladium ou du platine ou un alliage incluant l'un au moins de ces éléments.

## Patentansprüche

1. Verfahren zum Ofenlöten unter verdünnter oder kontrollierter Atmosphäre von zwei Werkstücken (1, 2), die unterschiedliche Ausdehnungskoeffizienten haben und/oder in Höhe ihrer Verbindung hohen Wärmegradienten ausgesetzt werden sollen, wobei dieses Verfahren darin besteht, zwischen den beiden Bereichen der beiden Werkstücke (1) und (2), wo die Lötnaht durchgeführt werden soll, ein Zwischenelement sowie Lötgut anzuordnen, diese Einheit in den Ofen zu bringen und einen Wärmezyklus durchzuführen, während dessen die beiden Werkstücke auf eine hohe Temperatur gebracht werden, die das Schmelzen der Lötgutzusammensetzung bewirkt, wobei die beiden Werkstücke anschließend einer Abkühlphase unterzgen werden, die die Erhärtung der Lötgutzusammensetzung und die Rückkehr der Einheit auf Umgebungstemperatur bewirkt, dadurch gekennzeichnet, daß das Zwischenelement einerseits eine erste Platte oder Metallfolie aus feuerfestem Metall (6) wie Molybdän, Tantal, Hafnium, Zirkon, Niobium, Wolfram oder einer Legierung, die mindestens eines dieser Elemente enthält, und andererseits eine zweite Platte oder Metallfolie (7) aus Kupfer, Kupferlegierung, Titan, Titanlegierung, Nickel oder Nickellegierung enthält, wobei die Lötgutzusammensetzung (4, 5) und (8) dann zwischen diesen Platten (6, 7) und zwischen diesen Platten (6, 7) und diesen Werkstücken (1, 2) angeordnet ist, und daß die zweite Platte oder Metallfolie (7) zwischen der ersten Platte (6) und dem Werkstück (2) angeordnet ist, das den größeren Ausdehnungskoeffizienten aufweist.

2. Verfahren nach Anspruch 1, dadurch gekennzeichnet, daß die Werkstücke (1, 2) während des Lötvorgangs aneinandergepreßt werden, wobei der Druck und das Anziehdrehmoment in Abhängigkeit von den verwendeten Materialen berechnet werden.

3. Verfahren nach einem der Ansprüche 1 und 2, dadurch gekennzeichnet, daß das Werkstück (1), das den niedrigeren Ausdehnungskoeffizienten aufweist und/oder auf die höhere Temperatur gebracht werden soll, aus Graphit, Keramik oder irgendeinem Material mit niedrigem Ausdehnungskoeffizienten besteht, eventuell bedeckt mit mindestens einer Verkleidung (15), die die Lötnaht ermöglicht.

4. Verfahren nach einem der vorhergehenden Ansprüche, dadurch gekennzeichnet, daß das Werkstück (2), das den höheren Ausdehnungskoeffizienten aufweist und/oder auf die niedrigere Temperatur gebracht werden soll, aus einem metallischen Material oder einem nicht-metallischen Material besteht, das eventuell, zumindest auf der zu lötenden Oberfläche des Werkstücks (1), mit einer Verkleidung (9) bedeckt ist.

5. Verfahren nach Anspruch 4, dadurch gekennzeichnet, daß diese Verkleidung (9) bei allgemeinen Verwendungen aus elektrolytisch oder durch Aufbringen von Metalldampf (PVD) aufgebrachtem Kupfer oder Nickel besteht, während diese Verkleidung für speziellere Anwendungen aus Silber oder Gold, Germanium, Lithium, Palladium oder Platin oder einer Legierung bestehen kann, die mindestens eines dieser Elemente enthält.

## Claims

1. An oven brazing process in rarefied or controlled atmosphere of two pieces (1, 2) having different coefficients of expansion and/or destined to be exposed to high thermic gradients around their junction, such process consisting in interposing, between the two pieces (1) and (2) to be brazed, an insert element and contributing metal, in placing this assembly in the oven and in ensuring a thermic cycle during which the two pieces are brought to a high temperature generating fusion of the contributing metallic compound, the two pieces undergoing then a cooling phase generating solidification of the contributing metallic compound and return of the said assembly to the ambient temperature, characterized in that the insert element comprises, in one hand, a first plaque or strip of refractory metal (6) such as molybdenum, tantalum, hafnium, zirconium, niobium, tungsten, or of an alloy containing at least one of these elements, and, on the other hand, a second plaque or strip (7) of copper, copper alloy, titanium, titanium alloy, nickel or nickel alloy, the contributing metallic compound (4,5) and (8) being then placed between the said plaques (6,7) and between said plaques (6,7) and said pieces (1,2), and in that the second plaque or strip (7) is placed between the first plaque (6) and the piece (2) which represents the highest coefficient of expansion.

2. The process according to claim 1, characterized by the fact that the pieces (1,2) are pressed one against the other in the course of the brazing, the pressure and the tightening of the couple being calculated according to the nature of the materials used.

3. The process according to one of the claims 1 and 2, characterized by the fact that the piece (1) having the lower coefficient of expansion and/or destined to be exposed to the higher temperature is made of graphite, ceramic, or any material having a low coefficient of expansion, and may possibly surfaced with at least one coating (15) allowing the brazing.

4. The process according to one of the preceding claims, characterized by the fact that the piece (2) having the higher coefficient of expansion and/or destined to be exposed to the lower temperature is made of metallic or non-metallic material which may possibly be covered, at least on the surface where the piece (1) is to be brazed, by a coating (9).

5. The process according to claim 4, characterized by the fact that the aforesaid coating (9) consists of copper or nickel deposited electrolytically or by physical vapour deposit (PVD) in the case of common applications, and for more specific applications, of a coating which may consist of silver or of gold, of germanium, of lithium, of palladium or of platinum or of an alloy including at least one of these elements.

FIG.1

FIG.2

FIG.3